# EUROPEAN PATENT APPLICATION

(11) **EP 4 050 534 A1**
(43) Date of publication of application: **31.08.2022**
(21) Application number: 21159508.7
(22) Date of filing: 26.02.2021
(51) Int. Cl.: G06Q 10/04, G06Q 10/06

(54) **METHOD AND SYSTEM FOR OPTIMIZING RESOURCE ALLOCATION WITHIN A DISTRIBUTED SYSTEM**

(71) Applicant: amplitude Holding UG, 80799 München (DE)
(72) Inventor: Jacob, Maximilian F., 80799 München (DE)
(74) Representative: Isarpatent

(57) **Abstract**

A computer-implemented method for optimizing a resource consumption and/or a resource generation by an autonomous entity (AE) within a distributed system, the method comprising the steps of sampling (S1) one or more resource related transactions (TRs) performed between the autonomous entity (AE) and other autonomous entities (AEs) of said distributed system by a sampling unit of said distributed system; categorizing (S2) the sampled resource related transactions (TRs) by a categorization unit receiving the sampled resource related transactions (TRs) from said sampling unit; classifying (S3) the categorized resource related transactions (TRs) by a classification unit on the basis of their respective categories, CATs, and on the basis of an occurrence frequency, OF, of the categorized resource related transactions within a predefined observation time period (OTP); aggregating (S4) resource quantities specified within the classified resource related transactions (TRs) belonging to the same transaction class by an aggregation unit over a predefined aggregation time period (ATP) to provide aggregated class values; and comparing (S5) by a comparator unit of a recommendation engine the aggregated class values of a selected set of transaction classes with predefined benchmark class value ranges to provide resource consumption predictions and/or resource consumption recommendations for the respective autonomous entity (AE) of said distributed system.

## Description

The invention relates to a computer-implemented method and system for optimizing a resource consumption and/or a resource generation by autonomous entities within a distributed system.

A distributed system can comprise a plurality of different kinds of autonomous entities which can communicate with each other and can coordinate their actions by passing messages to one another. The autonomous entities can comprise computational entities which communicate with the computational entities of other autonomous entities within the distributed system via a communication network. Besides the computational entities, each autonomous entity of the distributed system may comprise also units for providing goods or services. Goods comprise items that are tangible. Services comprise activities provided by an autonomous entity for another autonomous entity. For the production and generation of goods and services, it is required to use resources. These resources may include natural resources and/or human resources. Each autonomous entity of the distributed system can either produce resources or consume resources when performing an activity, in particular a technical process. Each autonomous entity of the distributed system can perform local transactions. These transactions can include transactions with other autonomous entities of the distributed system. A transaction can comprise for instance the transfer of a natural resource from one autonomous entity to another autonomous entity within the distributed system. Another example for a local transaction is the transformation of resources in a manufacturing process by machines of an autonomous entity to manufacture goods or products which in turn can be transferred to further autonomous entities of the distributed system. Transactions can comprise the provision of a resource by a source entity of the distributed system for a destination entity within the distributed system. For each transaction, there can be a balancing counter transaction from the destination entity to the source entity in exchange for the provided resource, product or service. The virtual balancing counter transaction can comprise a financial transaction in exchange for the received resource.

Resource allocation comprises provision of goods and services for the use of production or generation of other resources within a distributed system. When performing transactions within a distributed system, external effects or externalities can occur. These externalities can comprise environmental and/or human resource related externalities such as emissions which pollute the environment. The externalities can be classified as local, regional or global depending on the use case and the respective distributed system. A negative externality does impose a negative effect or impact on a third party, i.e. an autonomous entity other than the source entity and the destination entity of the respective transaction. For example, an autonomous entity for a distributed system may comprise a mobile entity such as a vehicle. During its movement, the vehicle consumes resources such as fuels. The combustion of the fuels generates emissions which can have a negative impact on the local environment and/or the global climate.

Accordingly, it is an object of the present invention to provide a method and system which provides recommendations for the autonomous entities of the distributed system in order to optimize resource allocation.

This object is achieved according to a first aspect of the present invention by a computer-implemented method comprising the features of claim 1.

The invention provides a computer-implemented method for optimizing a resource consumption and/or a resource generation by an autonomous entity within a distributed system, wherein the method comprises the steps of:
sampling one or more resource related transactions performed between the autonomous entity and other autonomous entities of said distributed system,
categorizing the sampled resource related transactions by a categorization unit receiving the sampled resource related transactions from said sampling unit,
classifying the categorized resource related transactions by a classification unit on the basis of their respective categories and on the basis of an occurrence frequency of the categorized resource related transactions within a predefined observation time period,
aggregating resource quantities specified within the classified resource related transactions belonging to the same transaction class by an aggregation unit over a predefined aggregation time period to provide aggregated class values and
comparing by a comparator unit of a recommendation engine the aggregated class values of a selected set of transaction classes with predefined benchmark class value ranges to provide resource consumption predictions and/or resource consumption recommendations for the autonomous entity of said distributed system.

In a possible embodiment of the computer-implemented method according to the first aspect of the present invention, the resource related transactions within the distributed system are sampled and stored in a central database of a trusted control entity of said distributed system.

In a further possible embodiment of the computer-implemented method according to the first aspect of the present invention, each resource related transaction comprises the provision of a resource by a source entity for a destination entity within the distributed system.

A resource may comprise a physical resource such as a raw material or energy or a service.

In a further possible embodiment of the computer-implemented method according to the first aspect of the present invention, the resource related transaction can comprise a virtual balancing counter transaction from the destination entity back to the source entity in exchange for the provided resource.

In a further possible embodiment of the computer-implemented method according to the first aspect of the present invention, each resource related transaction comprises an associated transaction dataset including transaction attributes stored in a local or remote database, in particular a central database.

In a further possible embodiment of the computer-implemented method according to the first aspect of the present invention, the transaction attributes of a resource related transaction comprise
a transaction identifier,
a transaction source entity identifier,
a transaction destination entity identifier,
an observation time period identifier which indicates the observation time period during which the associated resource related transaction has been performed,
a transaction time stamp which indicates a time when the resource related transaction has been performed within the respective observation time period,
a resource quantity of the resource,
a resource token or a resource metric of the resource and
a resource label which describes the resource related transaction.

In a further possible embodiment of the computer-implemented method according to the first aspect of the present invention, the transaction attributes of the transaction dataset of the respective transaction sampled by the sampling unit are processed by the categorization unit to provide a category for the respective resource related transaction which is included by the categorization unit into the transaction dataset as an additional transaction attribute to provide an extended transaction dataset.

In a further possible embodiment of the computer-implemented method according to the first aspect of the present invention, the occurrence frequency of the categorized resource related transactions within the predefined observation time periods is determined by a frequency logic of the classification unit.

In a still further possible embodiment of the computer-implemented method according to the first aspect of the present invention, the categorized resource related transactions are classified by a classifier logic of the classification unit into different transaction classes.

In a further possible embodiment of the computer-implemented method according to the first aspect of the present invention, the transaction classes comprise
a first class indicating a surplus of the respective resource at the autonomous entity during the observation time period, a second class indicating a storing or saving of the respective resource at the autonomous entity during the observation time period,
a third class indicating a regular consumption of the respective resource by the autonomous entity during the observation time period and
a fourth class indicating an unregular consumption of the respective resource by the autonomous entity during the observation time period.

In a further possible embodiment of the computer-implemented method according to the first aspect of the present invention, the aggregation time period comprises multiple times the observation time period.

In a still further possible embodiment of the computer-implemented method according to the first aspect of the present invention, the resource related recommendations and/or the resource related predictions for the autonomous entity are output by the recommendation engine via user interfaces of user equipment devices of users related to the autonomous entity of said distributed system.

In a further possible embodiment of the computer-implemented method according to the first aspect of the present invention, the resource related recommendations and/or resource related predictions are output by the recommendation engine to trigger automatically further resource related transactions and/or resource related technical activities by the autonomous entity during future observation time periods.

In a further possible embodiment of the computer-implemented method according to the first aspect of the present invention, categorizing the sampled resource related transactions by the categorization unit is performed based on entries in a look-up memory table stored in a local or central database.

In a still further possible embodiment of the computer-implemented method according to the first aspect of the present invention, the resource comprises a resource having an impact on the environment of the autonomous entities within the distributed system.

In a further possible embodiment of the computer-implemented method according to the first aspect of the present invention, the resource is produced or consumed by one or more machines of the autonomous entity in a technical process.

The production or consumption of the resource can cause energy and/or climate relevant emissions.

The invention further provides according to a further aspect a distributed system comprising a plurality of resource consuming and/or resource generating autonomous entities with associated transaction sampling units and at least one control entity adapted to perform the computer-implemented method according to the first aspect of the present invention to control the resource consumption and/or the resource generation by the autonomous entities, wherein the control entity is connected by means of a communication network with the distributed transaction sampling units of the autonomous entities of the distributed system.

In the following, possible embodiments of the different aspects of the present invention are described in more detail with reference to the enclosed figures.
- Fig. 1: shows a flowchart of a possible exemplary embodiment of a computer-implemented method according to the first aspect of the present invention;
- Fig. 2: shows a schematic diagram for illustrating the operation of a computer-implemented method and system according to the present invention;
- Fig. 3: shows a block diagram for illustrating a possible exemplary embodiment of a central entity within a distributed system adapted to perform a computer-implemented method according to the first aspect of the present invention;
- Fig. 4: shows a diagram illustrating the processing of transactions within a distributed system by a computer-implemented method according to the first aspect of the present invention.

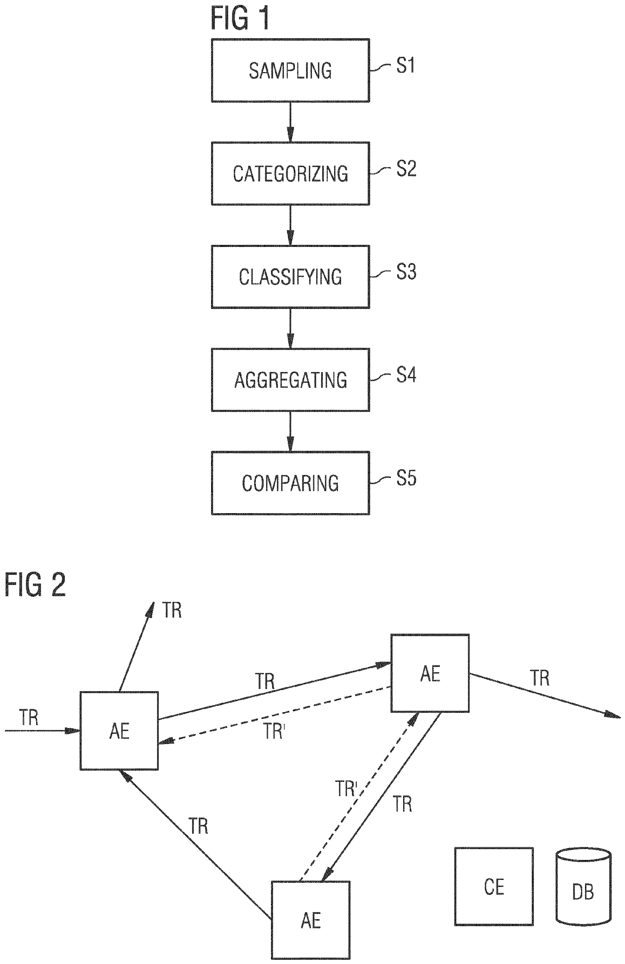

As can be seen from the flowchart of Fig. 1, the computer-implemented method according to the first aspect of the present invention may comprise several main steps. In the illustrated exemplary embodiment, the computer-implemented method comprises five main steps. The computer-implemented method illustrated in the flowchart of Fig. 1 is used for optimizing a resource consumption and/or a resource generation by at least one autonomous entity AE within a distributed system. Each autonomous entity AE can operate independently from other autonomous entities AEs of the distributed system. The autonomous entities AEs can communicate with each other via a common communication network comprising wired and/or wireless communication links. This communication network can be used to exchange messages between the autonomous entities AEs in encrypted form. Each autonomous entity AE can comprise either a single computer or processing means or a local area network of an autonomous entity AE such as a company or organization. Each autonomous entity AE of the distributed system can comprise a local memory for storing data and a processor adapted to process data locally. The autonomous entity AE can further comprise one or more machines adapted to consume and/or to generate resources. The autonomous entity AE can comprise interfaces to exchange messages with other autonomous entities AEs of the distributed system. The autonomous entity AE can also comprise a user interface for communication with a user associated with the respective autonomous entity AE. The autonomous entities AEs are adapted to perform electronic communication via a common communication network including transactions TRs between the different autonomous entities AEs. The transaction TR can comprise a transfer of a physical or digital good from one autonomous entity AE to another autonomous entity AE. Physical resources or goods can be transported from a first source autonomous entity AE to a destination autonomous entity AE. Further, a balancing counter transaction can be performed via the communication network from the destination entity to the source entity in exchange for the received resources, i.e. goods or services. The communication network can also be used for the transfer of resources, in particular digital goods including, for instance, digitally recorded songs or movies, images or books. Other resources such as raw materials or products require a physical transfer or transport from one autonomous entity AE to another autonomous entity AE in a logistic transportation process. Whereas a transaction TR involving digital goods can be performed instantaneously, the transfer of physical goods from a source entity to a destination entity requires some time. The transmission of a physical good by a source entity can be notified in advance to the intended receiving destination entity in a communication message transmitted according to a predefined communication protocol via the communication network. Further, a physical receipt of a transferred resource by a receiving destination entity can be notified to the sending autonomous entity AE by a corresponding communication message in a predefined communication protocol. In a preferred embodiment, the electronic communication is performed in encrypted form between the autonomous entities AEs of the distributed system. The communication between the autonomous entities AEs can be performed in real time during the operation of the autonomous entities AEs, in particular during the generation and consumption of resources by the respective autonomous entities AEs within the distributed system. The transactions TRs between the different autonomous entities AEs can be time-stamped in a preferred embodiment.

The distributed system as illustrated schematically in Fig. 2 can comprise a plurality of autonomous entities AEs for performing transactions TRs. The distributed system can comprise a central entity CE having access to a central database DB.

In a first main step S1 of the computer-implemented method according to the first aspect of the present invention, one or more resource related transactions TRs performed between an autonomous entity AE and another autonomous entity AE of the distributed system are sampled by a sampling unit associated to the respective autonomous entity AE and can be notified to the central entity CE of the distributed system. The sampled resource related transactions TRs performed between a first source entity and a second destination entity within the distributed system can be stored by the central entity CE in the central database DB for further processing.

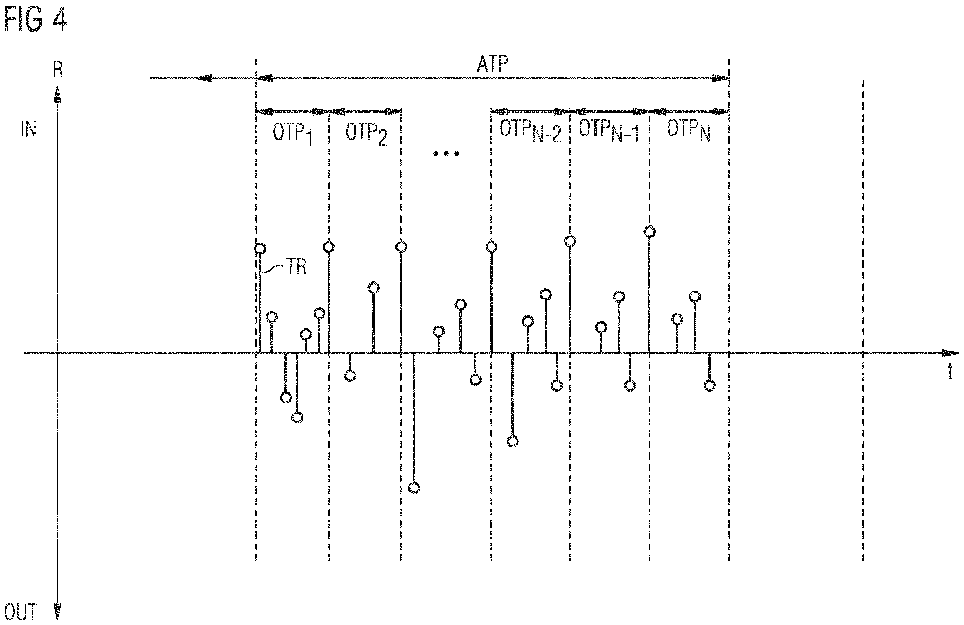

Fig. 4 shows schematically transactions TRs performed between a selected autonomous entity AE and other autonomous entities AEs of the distributed system in a time series over time. The resource related transactions TRs are sampled and can be stored in a central database DB of a trusted control entity CE of the distributed system. The resource related transaction TR can comprise the provision of a resource by the source entity for a destination entity within the distributed system. The resource related transaction TR can further comprise a virtual balancing counter transaction from the destination entity to the source entity in exchange for the provided resource. This may comprise a barter transaction TR or a financial transaction TR in an electronic payment system. Each transaction TR can involve the output of a resource from an autonomous entity AE to another autonomous entity AE or the input of the resource from another autonomous entity AE to the respective autonomous entity AE as also illustrated in Fig. 4. In the illustrated time series diagram of Fig. 4, each transaction TR represents the input or output of a specific resource R by an autonomous entity AE of interest over time within observation time periods OTPs forming part of an aggregation time period ATP. The occurrence frequency OF indicates how often an identical or similar transaction TR does occur within an observation time period OTP. Each resource related transaction TR as illustrated in Figs. 2, 4 can comprise an associated transaction dataset TRDS including transaction attributes stored in a local or central database. These transaction attributes can comprise in a possible embodiment a transaction identifier, i.e. a unique transaction identifier used to identify the respective transaction TR within the distributed system. The transaction attributes can further comprise a transaction source entity identifier and a transaction destination entity identifier. The transaction source entity identifier identifies the autonomous source entity of the respective transaction TR within the distributed system. The transaction destination entity identifier identifies the autonomous destination entity of the respective transaction TR within the distributed system. The transaction attributes of a transaction TR can further comprise an observation time period identifier, OTP-ID, which indicates the observation time period OTP during which the associated resource related transaction TR has been performed. The transaction attributes of the resource related transaction TR can further comprise a transaction time stamp, TR-TS, which indicates a time when the resource related transaction TR has been performed within the respective observation time period OTP. The time stamps of identical or similar transactions TRs can be evaluated to calculate the occurrence frequency OF of this kind of resource related transactions TRs. Similarity of transactions TRs can be determined automatically on the basis of the transaction attributes. In a further possible embodiment, the transaction attributes can comprise a resource quantity of the transferred resource R, in particular an amount or a number indicating the quantity or an amount of the transferred resource. The resource related transaction TR can further comprise a resource token or a resource metric of the respective resource. In a preferred embodiment, the resource related transaction TR further comprises at least one resource label which describes a resource related transaction TR. This resource label can for instance comprise a reference text or one or more keywords. One or more resource related transactions TRs performed between the autonomous entities AEs of the distributed system are sampled during operation of the distributed system by sampling units associated with the respective autonomous entities AEs. In a possible embodiment, the sampling units tap the transactions TRs performed via the communication network in real time. In a possible embodiment, the transactions TRs are first redirected to a central sampling unit before being forwarded to the destination entity.

In a further step S2, the sampled resource related transactions TRs are categorized by a categorization unit of a central entity CE receiving the sampled resource related transactions TRs from the sampling unit. The transaction attributes of the transaction dataset TRDS of the resource related transaction TR sampled by the sampling unit can be processed by the categorization unit in step S2 to provide a category CAT for the respective resource related transaction TR. This category CAT can be included by the categorization unit into the transaction dataset TRDS of the respective transaction TR as an additional transaction attribute to provide an extended transaction dataset eTRDS. In a possible embodiment, categorizing the sampled resource related transaction TR by the categorization unit may be performed also based on entries in at least one look-up memory table stored in the central database DB of the distributed system.

In a further step S3 of the computer-implemented method as illustrated in the flowchart of Fig. 1, the categorized resource related transactions TRs are classified by a classification unit on the basis of their respective categories CAT and on the basis of an occurrence frequency OF of the categorized resource related transactions TRs within a predefined observation time period OTP. In a possible embodiment, the occurrence frequency OF of the categorized resource related transactions TRs within the predefined observation time periods OTPs can be determined or detected by a frequency logic of the classification unit of the central entity CE. In a possible embodiment, the categorized resource related transactions TRs are classified by a classifier logic of the classification unit into a predefined set of different transaction classes. The frequency logic can calculate a similarity metric sm for pairs of transactions TRs which represent the extent of similarity between two transactions TRs. For example, a similarity metric sm=1 means that the two transactions TRs are identical. If the similarity metric sm is above a threshold both transactions TRs are regarded as being similar. The similarity metric sm can be calculated on the basis of transaction attributes given in the transaction datasets TRDSs of both transactions TRs.

In a further step S4 of the computer-implemented method as illustrated in Fig. 1, resource quantities specified within the classified resource related transactions TRs belonging to the same transaction classes are aggregated by an aggregation unit of a central entity CE over a predefined aggregation time period ATP to provide aggregated class values. The aggregation time period ATP comprises in a preferred embodiment multiple times the observation time period OTP such as also illustrated in Fig. 4. The observation time period OTP may vary depending on the use case. The observation time period OTP may vary from milliseconds to months.

In a further step S5, the aggregated class values of a selected set of transaction classes are compared by a comparator unit of a recommendation engine within the central entity CE with predefined benchmark class value ranges to provide resource consumption predictions and/or resource consumption recommendations for the autonomous entity AE within the distributed system.

The resource related recommendations and/or resource related predictions for the respective autonomous entity AE of interest provided by the recommendation engine can be output by the recommendation engine in a possible embodiment via user interfaces of user equipment devices for users related to the respective autonomous entity AE. This autonomous entity AE can for instance be a company or an organization performing transactions TRs with other autonomous entities AEs of the distributed system. The autonomous entity AE can also comprise a single autonomous entity device such as a user equipment performing transactions TRs with other autonomous entities AEs of the distributed system.

The resource related recommendations and/or resource related predictions provided by the recommendation engine can also be output by the recommendation engine via data interfaces in a communication network to trigger automatically resource related transactions TRs with other autonomous entities AEs during future observation time periods OTPs. The calculated recommendations output by the autonomous entity AE can also trigger automatically resource related technical activities by the same autonomous entity AE or by other autonomous entities AEs within the distributed system during future observation time periods OTPs. The triggered resource related technical activities can be for instance performed by machines of the autonomous entity AE. These technical activities can comprise technical processes concerning a resource related transaction TR such as a technical transformation process transforming one or more resources into another resource such as a product or good. For instance, the resource fuel can be transformed in a combustion process of a motor forming a machine of an autonomous entity AE whereby emissions such as CO₂ emissions are generated automatically having a negative impact on the environment. Resource related recommendations provided by the recommendation engine can comprise recommendations and/or control commands which can be output to trigger automatically resource related technical processes performed by machines of the autonomous entity AE. In this way, also external effects can be controlled implicitly within the distributed system.

The classification performed in step S3 can be performed by a classifier logic using a predefined set of different classification classes. These classification classes can comprise in a possible embodiment a first class indicating a surplus of a respective resource at the autonomous entity AE during the observation time period OTP. The classification classes can further comprise a second class indicating a storing or saving of the respective resource at the autonomous entity AE during the respective observation time period OTP. The classification class can further comprise a third class indicating a regular consumption of the respective resource by the autonomous entity AE during the observation time period OTP. A fourth classification class can indicate an unregular consumption of the respective resource by the autonomous entity AE during the observation time period OTP. The number of different classification classes can vary depending on the use case.

In a possible embodiment, the computer-implemented method can be used for optimizing a resource consumption and/or a resource generation by an autonomous entity AE within a distributed industrial system. The industrial system can comprise a plurality of autonomous entities AEs each having computers within a local computer network adapted to control the production of goods or products by machines of a production facility of the autonomous entity AE. In a possible embodiment, the computer-implemented method according to the present invention can for example be used to control the generation and consumption of carbon dioxide CO₂ within a distributed industrial system on a local or global level. In this embodiment, all company activities for each autonomous entity AE or company can be sampled in a local or central database DB. Every transaction TR or activity can comprise an associated transaction dataset TRDS. The sampling of the resource related transactions TRs and/or technical activities, in particular technical processes performed by machines of the autonomous entity AE, can be performed in a possible embodiment online in real time or offline.

In the given example, the sampled resource related transaction TR can comprise a resource quantity of the resource, e.g. a value of the CO₂ consumption with a certain token or metric unit, for example, ppm (parts per million). During step S2, an additional data point can be added to the respective transaction dataset TRDS of the transaction TR, i.e. the category CAT. This category CAT can be dependent on the description of the transaction TR, the origin of the transaction TR and other data points provided in the original transaction dataset TRDS.

In a further step S3, there can be, for example, four different types of classes used for classifying the respective transaction TR. A first transaction class may for example describe the surplus of the respective resources, meaning the opposite of consumption. For example, if a company as an autonomous entity AE performs as an activity or transaction TR a process of conserving CO₂ consumption, this can be considered as a surplus and the associated transaction TR can be classified as belonging to the transaction class #class 1 (surplus). A second transaction class of the resource related transaction TR analyzes a characteristics of storing and saving the respective resource, i.e. in this case of carbon dioxide CO₂. In a possible embodiment, CO₂ can be cleaved off and stored in a certain container in order to not distribute it to the environment. A further surplus can be considered via a consumption of the resource on a fixed basis, i.e. indicating a regular consumption or generation of the respective resource by the autonomous entity AE during a predefined observation time period OTP. This may include, for instance, the same or similar amount or value of a consumed resource for each of consecutive observation time periods OTPs in a regular manner. The fourth classification class can for instance represent a variable consumption behavior by an autonomous entity AE. For example, the more a machine of an autonomous entity AE is running, the more fuel as a resource is consumed and more carbon dioxide CO₂ is emitted.

After having classified the resource related transactions TRs by the classification unit on the basis of the respective categories CAT and on the basis of the occurrence frequency OF, an aggregation of the resource quantities can be performed in step S4. The resource related transactions TRs comprise transactions TRs related to the consumption or generation of carbon dioxide CO₂ in the given example. Each transaction resource quantity is specified, i.e. a resource quantity of the resource carbon dioxide CO₂. The resource quantity is specified within the classified resource related transactions TRs belonging to the same transaction class, e.g. belonging to one of the four transaction classes indicated above, over a predefined aggregation time period ATP to provide aggregated class values. The results are cumulative values for each transaction class and their predefined aggregation time period ATP. This aggregation time period ATP can be for instance a multiple of the observation time period OTP. In a possible embodiment, the observation time period OTP can be adjusted depending on the use case. For example, for optimizing the generation and consumption of carbon dioxide CO₂ in an industrial distributed system, the observation time period OTP can be for instance one day. The observation time period OTP can be a multiple of the sampling time applied by the sampling unit when sampling the resource related transactions TRs. These resource related transactions TRs can be sampled every minute during an industrial process.

In a fifth step S5, a comparator unit of the recommendation engine can compare the aggregated class values of a selected set of transaction classes with predefined benchmark class value ranges to provide resource consumption predictions and/or to provide resource consumption recommendations for the autonomous entity AE, e.g. an autonomous factory of the distributed system. For instance, a company having one or more production facilities can be provided with benchmark consumption values for each aggregation time period ATP and for every transaction class, i.e. for #1 class, #2 class, #3 class, #4 class. For example, the recommendation engine can recommend or propose certain actions to improve the consumption behavior of autonomous entities AEs such as companies and can also reward companies for the adherence of these CO₂ consumption benchmarks, for example by using CO₂ certificates.

The recommendation engine may provide different kinds of recommendations. For example, if the #3 transaction class (fixed consumption per aggregation time period ATP) CO₂ consumption value is above the predefined benchmark, this can mean that for instance the monthly consumption or generation of CO₂ is out of the predefined range. By performing benchmarking across different industrial sectors, all autonomous entities AEs or companies can be treated equally and can therefore be compared to each other with respect to their performance of resource consumption and/or resource generation. The recommendation engine of the central entity CE can use additional data sources or databases DB for calculating resource consumption predictions and/or resource consumption recommendations. For example, a government can pass a law that every company or autonomous entity that does store carbon dioxide CO₂ (i.e. transaction class #2) of a predefined benchmark is rewarded with certificates that can be traded with other autonomous entities AEs or companies in the industrial sector that do not fulfill the predefined standards. For instance, production facilities of autonomous entities AEs such as companies in an industrial sector may often use outdated lowperforming machines M. If the variable carbon dioxide generation or consumption (#4 transaction class) is outside a predefined average range this may indicate at the autonomous entity AE the use of an outdated machinery park that may either consume too many resources such as fuel or may emit too much emissions (such as carbon dioxide) in the environment when compared to the resulting products or goods. In this case, the machinery park of the production facility of the autonomous entity AE does not provide a sustainable basis and the machines M of the production facility require replacement to meet environmental standards. In this case, the recommendation engine may recommend an investment into modern machines which generate less unwanted emissions to the environment. In a possible embodiment, the recommendations generated by the recommendation engine can be output via a user interface to a user of the autonomous entity AE such as a responsible person or stakeholder of the respective company. In a still further possible embodiment, the recommendation engine can also output generated commands or control signals to trigger automatically resource related transactions and/or activities depending on a calculated difference between the aggregated class values for a selected set of transaction classes with predefined benchmark class value ranges. For example, if the carbon dioxide emissions during one or more observation time periods OTPs, e.g. during a predefined aggregation time period ATP, exceed predefined benchmark class value ranges in one or more of the transaction classes, technical processes performed by machines M of the production facility can be turned off automatically for a certain time to fulfill the environmental requirements. The recommendations can also be output via data interfaces of the affected autonomous entities AEs to other autonomous entities AEs to trigger resource related activities of other autonomous entities AEs of the distributed system such as turning off a polluting machinery. Further, the recommendation can also trigger a transaction TR with another autonomous entity AE to purchase a CO₂ certificate allowing to continue the further processing of the machinery. For example, emission trading activities can be triggered for controlling pollution within a predefined zone or area of the distributed system.

The computer-implemented method according to the first aspect of the present invention as illustrated in the flowchart of Fig. 1 may also for example be used to optimize the electricity consumption in a private household. For example, in today's private households, there can be many solar panels that produce electricity. A user can make use of recommendations on how to change his resource consumption behavior regarding electricity.

In a first step S1, the electrical power flow transactions can be sampled using a sampling unit, in particular by metering devices. The resource related transactions TRs between a local photovoltaic system and other autonomous entities AEs such as the power supply grid can be stored in a central database DB.

Each power flow sampled by the sampling unit and stored in the database DB can comprise an associated transaction dataset TRDS including e.g. the value of the power flow with a certain token or metric. Additional to these data points, a category CAT of the power flow transaction can be added in step S2 to provide an extended transaction dataset eTRDS. This category CAT can be dependent on a description of the power flow transaction TR and other attributes of the power flow transaction dataset TRDS.

In a further step S3, categorized power flow related transactions TRs can be classified by a classification unit on the basis of the respective categories CAT and on the basis of an observed occurrence frequency OF of the categorized power flow related transactions TRs within a predefined observation time period OTP.

For instance, a first transaction class can indicate a surplus of the respective resource. For example, the solar panels of the photovoltaic system located on the roof may provide electricity, i.e. providing a positive surplus of electrical energy.

A second transaction class of a resource based transaction TR can underlie the characteristics of storing the electricity, e.g. in a local battery. The electricity may be stored in a local electricity storage or can also be fed into the public power supply grid.

The third transaction class can be considered to be a consumption on a regular basis. The same amount or value of the electricity consumption for each consecutive observation time period OTP is ongoing having an undefined ending of the time horizon. For example, electricity consumed by a ventilation system for fresh air or by a refrigerator that is not going to be unplugged during night or day.

The fourth transaction class may characterize a variable consumption behavior, for example the charging of the battery of an electrical vehicle for a couple of hours during the day.

The resource quantity is specified within the classified resource related transactions TRs belonging to the same transaction class and then again aggregated in step S4 by an aggregation unit over a predefined aggregation time period ATP, for instance over 24 hours, to provide an aggregated class value.

A comparator unit of a recommendation engine compares in step S5 the aggregated class values of a selected set of transaction classes with predefined benchmark class value ranges to provide recommendations and/or predictions concerning the consumption and/or generation of the electrical power.

For instance, a household running a photovoltaic system can be advised to be aligned with benchmarks for the electricity consumption behavior, i.e. benchmark values for every transaction class per aggregation time period ATP. The recommendation engine can propose certain actions and/or transactions to improve the consumption behavior, for instance to achieve an autonomous level of electricity consumption. For instance, if the resource quantities within the classified resource related transactions TRs belonging to the third transaction class (fixed electrical consumption per period) is above a predefined benchmark value, this can be interpreted as that the monthly electricity consumption for the household is too high. As a result, a recommendation can be generated indicating that the monthly electricity consumption is too high, for example because the used refrigerator is outdated and consumes too much electricity. In this example, a user of the local system may receive the recommendation to substitute the outdated power-consuming refrigerator or machine by a modern refrigerator consuming less electricity or electrical power.

In a household, there is normally only a certain amount of electricity or power that can be stored, for instance in a local battery. By having benchmarks for each period, a better consumption behavior can be evoked by using electricity when it is produced. For instance, if the storage benchmark is too high in a certain period of time, charging of a battery of an electrical vehicle can be recommended to be scheduled during such periods.

A further exemplary recommendation can be provided by the recommendation engine when the variable electricity consumption (#4 class) is for instance above a household average (= benchmark value) and provides immediate feedback to a household owner that their power consumption behavior is not optimal.

The computer-implemented method according to the present invention as illustrated in the flowchart of Fig. 1 can also be used for optimizing financial resources of a user. In this embodiment, the transactions TRs comprise financial transactions TRs using digital payment services. In a first step S1, the financial transactions TRs can be sampled and stored in the database DB for each autonomous entity AE. For each financial transaction TR, an associated transaction dataset TRDS can be provided. The transaction dataset TRDS can comprise several transaction attributes including a transaction identifier. The transaction attributes can also comprise a resource quantity of the financial transaction, i.e. a value and a predefined token or currency. The sampled resource related transactions TRs can be categorized in step S2 by the categorization unit by processing all available transaction attributes of the respective transaction dataset TRDS. The category CAT can be dependent on the resource label or transaction description given for the respective financial transaction TR. Other attributes of the transaction dataset TRDS used by the categorization unit to categorize the financial transaction TR can also include the sender or recipient of the financial transaction TR, in particular an account number of the sender or recipient of the financial transaction TR.

In a possible embodiment, the transaction TR is classified in step S3 as belonging to one of four predefined transaction classes, i.e. a first class indicating a surplus of a financial resource, for instance a regular or one-time income of a user of the associated autonomous entity AE during an observation time period OTP. For a financial transaction TR, the typical observation time period OTP chosen for processing the transaction datasets TRDSs comprises one month. A second transaction class of the financial transaction TR analyzes the characteristics of storing or saving the financial resource in an account, in particular for further investments. The third transaction class comprises a consumption of financial resources on a regular basis. An identical or similar amount of a financial resource can be consumed for each consecutive observation time period OTP (e.g. month) in a regular manner. This may for instance comprise contractual-based costs such as a monthly rent, mobile phone contracts or a gym membership of the user. A fourth transaction class may comprise a variable consumption behavior of the user when consuming the financial resource such as fueling up his car with gasoline or going to a grocery shop to purchase goods.

The recommendation engine can provide recommendations and/or predictions for each of the transaction classes using predefined benchmark class value ranges. A person or user can be advised by using benchmarks for his financial resource consumption behavior in order to achieve a sustainable financial situation for the user on the basis of benchmark values for every transaction class per aggregation time period ATP. The predefined aggregation time period ATP may for instance comprise three, six or twelve months.

The recommendation engine can propose certain actions to improve the consumption behavior of the user for future observation time periods OTPs.

For instance, if the consumption value for the third transaction class (#3 class), i.e. a regular or fixed consumption per observation time period OTP is above a benchmark, this may for instance mean that the monthly rate of financial burdens for the user is too high. As a result, the user can for example decide whether to determinate a gym membership contract. Further, the user may be made aware that he may not be able to afford a new apartment based on his current financial situation. If the regular financial resource consumption is above the benchmark, the recommendation generated by the recommendation engine can advise the user to move to a smaller less costly apartment and/or to refrain from moving to another more costly apartment. In this way, the user gets assistance in performing rational decisions concerning the consumption of personal financial resources and to achieve a more sustainable lifestyle. A further possible recommendation indicates a certain amount of financial resources or assets a person or user should take aside and save. By comparing the actual class 2 benchmark for the second transaction class, the recommendation engine can calculate recommendations for the user on how a user can save assets, in particular physical or financial resources, on a regular, e.g. monthly, basis. This can also include an advice or feedback to the user whether the user or person has got a healthy level of financial liabilities or not.

Human behavior is mostly not rational, especially when it comes to consumption of financial resources or assets. If the variable consumption of financial resources (#4 class) is above an individual average per period, the recommendation engine can give an immediate feedback to the user that his income does not sustain the financial spending. In this way, the recommendation engine can have an impact on the financial consumption behavior of the user to provide a sustainable financial situation of the user.

From the above example, it is evident that the computer-implemented method for optimizing the resource consumption and/or resource generation of resources by an autonomous entity AE within a distributed system can be applied to a wide variety of different use cases.

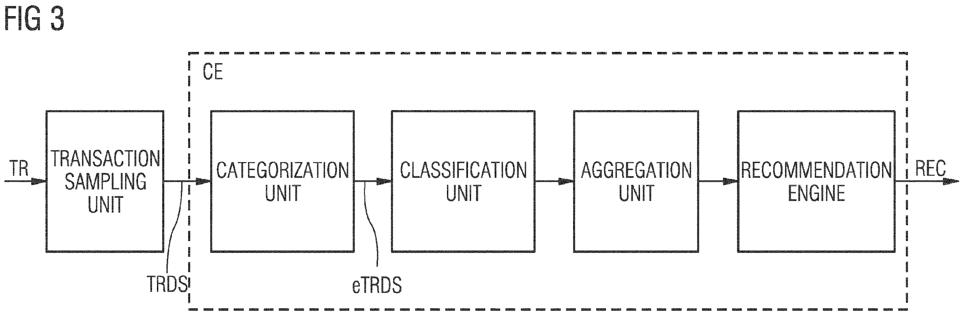

The central entity CE of the distributed system can comprise several units as illustrated in the block diagram of Fig. 3. In the illustrated example, the central entity CE comprises a categorization unit, a classification unit, an aggregation unit and a recommendation engine.

The categorization unit receives transaction datasets TRDSs from one or more transaction sampling units deployed in the distributed system. The categorization unit is adapted to categorize the sampled resource related transactions TRs by processing the received transaction datasets TRDSs. The categorization unit can process the transaction attributes within the transaction datasets TRDSs to provide a category CAT for the respective resource related transaction TR and can include a category CAT as an additional attribute in the transaction dataset TRDS to provide an extended transaction dataset eTRDS as also illustrated in Fig. 3. The categorization unit can also have access to a look-up memory table stored in a local or central database of the system. This look-up memory table can be used for mapping. The look-up table may for instance be used to map a finAPI category of predefined sets of categories CAT.

The central entity CE further comprises a classification unit adapted to classify the categorized resource related transaction TR on the basis of their respective categories CAT and on the basis of an occurrence frequency OF of the categorized resource related transactions TRs within a predefined observation time period OTP. The classification unit can comprise a classifier logic for performing the classification, in particular a classification into different transaction classes. The classifier logic can comprise in a possible embodiment an artificial neural network ANN which can be trained by supervised machine learning ML on a training dataset TRDS. In a possible embodiment, the classification unit further comprises a frequency logic. The occurrence frequency OF of the categorized resource related transactions TRs within the predefined observation time period OTP is determined by the frequency logic of the classification unit. For instance, for a financial transaction when the same amount of a financial resource is transferred by the same sender around the same day or date within an observation time period OTP of one month and this is performed for more than two consecutive OTPs, the frequency logic of the classification unit may classify the transaction TR as repeatedly or regular. In a possible embodiment, the frequency logic of the classification unit may comprise two states, i.e. #repeatedly or #not repeatedly. For instance, in the example illustrated in Fig. 4, the accumulated transaction period ATP can comprise N=12 months, i.e. a year consisting of twelve consecutive observation time periods OTP1 to OTP12. At the beginning of each observation time period (month) in the given example, the autonomous entity AE of a user receives a regular income as a financial transaction from another autonomous entity AE, e.g. the user's employer. In the given example, the autonomous entity AE can have other sources of income, regular or irregular. Further, there are outgoing transactions TRs varying in the amount of financial resources at different times within the different observation time periods OTPs. A transaction TR with a high amount of output financial resources which occurs on a unregular basis indicates an unregular consumption of the financial resources belonging to the fourth transaction class. Such a financial spending transaction TR with a high resource quantity or a financial resource transaction amount can have an impact on the financial equilibrium of the autonomous entity AE and the recommendation engine can derive a recommendation to the operator or user of the autonomous entity AE concerning this or any similar financial transaction TR. In a possible embodiment, the transaction time series illustrated in Fig. 4 can be displayed on a display of a user interface to a user associated to the autonomous entity AE to provide a feedback on the performed transactions TRs. The transactions TRs of the different transaction classes can be filtered in a possible embodiment by filter elements of the recommendation engine. In this way, a user receives a more transparent overview of the resource related transactions TRs within the aggregation time period ATP. In this way, the user receives an assistance in performing future transactions TRs.

In a possible embodiment, each autonomous entity AE can comprise a user equipment device such as a mobile phone to perform transactions TRs with other autonomous entities AEs of the distributed system. In this embodiment, the computer-implemented method can be implemented by an application program which can be run by a processor of the autonomous entity device. This application program can be downloaded from a central database DB of the distributed system. The application can comprise for instance a software tool supporting a manager of a production facility in handling emissions of the factory having an impact on the environment. The application may also comprise a software tool in assisting a user of a photovoltaic system in planning and running the photovoltaic system. An application may also comprise a tool for assisting a user in planning financial transactions TRs. In a possible embodiment, the benchmark class value ranges for the different transaction classes can also be downloaded by the transaction assistance tool implementing the computer-implemented method according to the present invention from a central database DB.

Further embodiments of the computer-implemented method according to the present invention are possible. In a possible embodiment, each autonomous entity AE can be registered at the central control entity CE of the distributed system. The autonomous entities AEs can comprise mobile or immobile entities. The absolute position and/or relative position between two autonomous entities AEs can influence in a possible embodiment of the distributed system the respective transactions TRs, in particular the resource related quantities. In this embodiment, the transaction dataset TRDS further comprises as an attribute a current position and/or coordinates of the respective autonomous entity AE. An example for a mobile autonomous entity AE is an autonomous vehicle communicating with other autonomous entities AEs. Another example for a mobile autonomous entity AE is a mobile user equipment device such as a mobile phone. Other autonomous entities AEs include autonomous entities AEs with a fixed position such as production facilities of a company having machines M controlled by a controller via a local area network LAN. The distributed system can comprise a wide variety of different types of autonomous entities AEs performing resource related transactions TRs with each other. Each autonomous entity AE can comprise a corresponding unique autonomous entity AE identifier. The transaction dataset TRDS of the autonomous entity AE can also indicate as an additional transaction attribute a type of the respective autonomous entity AE. The autonomous entity type may for instance indicate whether the autonomous entity AE is a mobile phone, an autonomous vehicle, a user terminal, a production facility, a resource transport vehicle, etc. The distributed system according to the present invention provides in a preferred embodiment a handling of different resources and associated resource related transactions TRs simultaneously. In this embodiment, the resource related transaction dataset TRDS further comprises as an additional transaction attribute a kind or type of the respective resource. For instance, the resource type included as a transaction attribute in the transaction dataset TRDS may indicate the respective resource, for instance whether the resource comprises a specific emission gas, energy or a financial resource. There can be a wide variety of different resource types included as transaction attributes in the transaction dataset TRDS. For instance, a first transaction TR can comprise the delivery of a physical good or raw material from a first autonomous entity AE such as a factory to a second autonomous entity AE such as a private household, whereas a second resource related transaction TR comprises in return a financial transaction TR from an account of the private household to an account of the producing factory. In this simple example, a first transaction TR comprises as a transaction attribute the resource type "good" and the other transaction TR comprises as the resource type "financial". In this way, the distributed system according to the present invention can be used to control the resource consumption and/or the resource generation of different kinds of resources by the distributed autonomous entities AEs. The transactions TRs performed by the distributed system can comprise peer-to-peer transactions TRs between peer autonomous entities AEs. The transaction TR performed between the peer autonomous entities AEs can be sampled by associated sampling units of the autonomous entities AEs and supplied to a central control entity CE of the distributed system adapted to execute the computer-implemented method according to the first aspect of the present invention. The computer-implemented method can be performed in a possible embodiment by a computer program or routine implemented by an application program. The computer-implemented method can be performed in real time during the operation of the distributed system. The sampling rate for sampling the resource related transactions TRs can be adapted to the respective use case where the sampling periods can range from a few milliseconds to hours and days. In a possible embodiment, the sampling rate can be adapted by the central entity CE. This adaption can also be triggered by an observed event within the distributed system. For example, if the emission levels of the polluting emissions exceed a critical level in a predefined region, the sampling rate for sampling resource related transactions TRs between autonomous entities AEs being currently located or moving in the affected region can be increased to provide for more accurate resource consumption predictions for the autonomous entities AEs in the respective region of the distributed system. In a possible embodiment, the distributed system can comprise a plurality of sensor elements deployed in the field and adapted to measure a resource distribution in the field. For example, sensors distributed in the field may measure the level of toxic emissions at certain sites within a predefined region. The sensor data is supplied via a communication or a data network to the recommendation engine of the central entity CE. Taking into account the sensor data, the recommendation engine can calculate recommendations for the autonomous entities AEs within the affected region. For instance, if the toxic emission levels for carbon dioxide exceeds a predefined level, a power plant consuming fuel to generate electrical power and thereby generating CO₂ emissions can get a recommendation or can get control signals to reduce the transaction activity of burning fuel in a combustion process and thereby reducing the CO₂ emissions in the respective region or area. Accordingly, in a possible embodiment, the recommendation engine calculates the resource consumption predictions and/or the resource consumption recommendations for autonomous entities AEs of the distributed system also based on sensor data received from sensors deployed in the field and/or associated with corresponding autonomous entities AEs. In a further possible embodiment, the sensor data generated by a sensor of an autonomous entity AE can be encapsulated with additional transaction attributes in a transaction dataset TRDS of a performed resource related transaction.

The computer-implemented method according to the present invention provides for a robust and resilient process for optimizing a resource consumption and/or a resource generation by various autonomous entities AEs within a distributed system. By setting predefined benchmark class value ranges, the operation behavior of the autonomous entities AEs of the distributed system can be influenced to achieve a target or goal. This target can comprise an individual target, i.e. optimizing the resource related behavior of a single autonomous entity AE, and/or a global target, i.e. influencing the common operation behavior of all autonomous entities AEs, to achieve a common goal such as minimizing the emission of polluting substances into the environment.

## Claims

1. A computer-implemented method for optimizing a resource consumption and/or a resource generation by an autonomous entity (AE) within a distributed system,
the method comprising the steps of:
- sampling (S1) one or more resource related transactions (TRs) performed between the autonomous entity (AE) and other autonomous entities (AEs) of said distributed system by a sampling unit of said distributed system;
- categorizing (S2) the sampled resource related transactions (TRs) by a categorization unit receiving the sampled resource related transactions (TRs) from said sampling unit;
- classifying (S3) the categorized resource related transactions (TRs) by a classification unit on the basis of their respective categories, CATs, and on the basis of an occurrence frequency, OF, of the categorized resource related transactions within a predefined observation time period (OTP);
- aggregating (S4) resource quantities specified within the classified resource related transactions (TRs) belonging to the same transaction class by an aggregation unit over a predefined aggregation time period (ATP) to provide aggregated class values; and
- comparing (S5) by a comparator unit of a recommendation engine the aggregated class values of a selected set of transaction classes with predefined benchmark class value ranges to provide resource consumption predictions and/or resource consumption recommendations for the respective autonomous entity (AE) of said distributed system.

2. The computer-implemented method according to claim 1 wherein the resource related transactions (TRs) within the distributed system are sampled by at least one sampling unit and stored in a central database of a trusted central control entity (CE) of said distributed system.

3. The computer-implemented method according to claim 1 or 2 wherein each resource related transaction (TR) comprises a provision of a resource by a source entity for a destination entity within the distributed system and/or a balancing counter transaction from the destination entity to the source entity in exchange for the provided resource.

4. The computer-implemented method according to any of the preceding claims 1 to 3 wherein each resource related transaction (TR) comprises an associated transaction dataset (TRDS) including transaction attributes stored in the central database.

5. The computer-implemented method according to claim 4 wherein the transaction attributes of a resource related transaction (TR) comprise
- a transaction identifier,
- a transaction source entity identifier,
- a transaction destination entity identifier,
- an observation time period identifier which indicates the observation time period (OTP) during which the associated resource related transaction has been performed,
- a transaction time stamp which indicates a time when the resource related transaction (TR) has been performed within the respective observation time period (OTP),
- a resource quantity of the resource,
- a resource token or a resource metric of the resource,
- a resource label of the resource which describes the resource related transaction (TR).

6. The computer-implemented method according to claim 5 wherein the transaction attributes of the transaction dataset (TRDS) of the transaction (TR) sampled by the sampling unit are processed by the categorization unit to provide a category, CAT, for the respective resource related transaction (TR) which is included by the categorization unit into the transaction dataset (TRDS) as an additional transaction attribute to provide an extended transaction dataset (eTRDS).

7. The computer-implemented method according to any of the preceding claims 1 to 6 wherein the occurrence frequency, OF, of the categorized resource related transactions (TRs) within the predefined observation time periods (OTPs) is determined by a frequency logic of the classification unit.

8. The computer-implemented method according to any of the preceding claims wherein the categorized resource related transactions (TRs) are classified by a classifier logic of the classification unit into different transaction classes comprising
- a first class (#1) indicating a surplus of the respective resource at the autonomous entity (AE) during the observation time period (OTP),
- a second class (#2) indicating a storing or saving of the respective resource at the autonomous entity (AE) during the observation time period (OTP),
- a third class (#3) indicating a regular consumption of the respective resource by the autonomous entity (AE) during the observation time period (OTP), and
- a fourth class (#4) indicating an unregular consumption of the respective resource by the autonomous entity (AE) during the observation time period (OTP).

9. The computer-implemented method according to any of the preceding claims wherein the aggregation time period (ATP) is multiple times, N, the observation time period (OTP) .

10. The computer-implemented method according to any of the preceding claims wherein the resource related recommendations and/or the resource related predictions for the autonomous entity (AE) are output by the recommendation engine via user interfaces of user equipment devices of users related to the autonomous entity (AE) of said distributed system.

11. The computer-implemented method according to any of the preceding claims wherein the resource related recommendations and/or resource related predictions are output by the recommendation engine to trigger automatically resource related transactions (TRs) and/or resource related technical activities by the autonomous entity (AE) during future observation time periods (OTPs).

12. The computer-implemented method according to any of the preceding claims wherein categorizing the sampled resource related transactions (TRs) by the categorization unit is performed based on entries in a look-up memory table stored in the central database.

13. The computer-implemented method according to any of the preceding claims wherein the resource comprises a resource having an impact on the environment of the distributed system.

14. The computer-implemented method according to claim 13 wherein the resource is produced or consumed by one or more machines of the autonomous entity (AE) in a technical process and comprises in particular energy and/or climate relevant emissions.

15. A distributed system comprising a plurality of resource consuming and/or resource generating autonomous entities (AEs) with associated transaction sampling units and at least one control entity (CE) adapted to perform the computer-implemented method according to any of the preceding claims 1 to 14 to control the resource consumption and/or the resource generation by the autonomous entities (AEs),
wherein the control entity (CE) is connected by means of a communication network with the distributed transaction sampling units and/or with the autonomous entities (AEs) of said distributed system.

16. A transaction planning software tool implementing the computer-implemented method according to any of the preceding claims 1 to 14.
